# EUROPEAN PATENT SPECIFICATION

(11) **EP 0 503 049 B1**
(45) Date of publication and mention of the grant of the patent: **19.06.1996**
(21) Application number: 91918063.8
(22) Date of filing: 13.09.1991
(51) Int. Cl.: B01D 53/04

(54) **PRESSURE AND TEMPERATURE SWING ADSORPTION SYSTEM**
DRUCK- UND TEMPERATURWECHSELADSORPTIONSVORRICHTUNG
SYSTEME D'ADSORPTION A OSCILLATIONS DE PRESSION ET DE TEMPERATURE

(30) Priority: 01.10.1990 US 590750
(43) Date of publication of application: 16.09.1992
(73) Proprietor: FMC CORPORATION, Chicago Illinois 60601 (US)
(72) Inventor: MALIK, Ram, L., Fremont, CA 94555 (US)
(74) Representative: Altenburg, Udo, Dipl.-Phys.
(86) International application number: US9106639
(87) International publication number: WO9205859

(56) References cited:
- US-A- 3 124 438
- US-A- 3 243 938
- US-A- 3 713 272
- US-A- 4 732 579
- US-A- 4 793 832

## Description

The present invention relates to method and apparatus for purifying and thereafter continuously controlling the temperature of a three bed PSA/TSA filtering system which receives air containing hazardous nuclear, biological and chemical warfare agents, and supplying cool clean air to personnel with the crew compartment of a combat vehicle or the like by use of combined pressure swing and temperature swing adsorption technology.

Assignees Veltman et al Patents 4,732,579 and 4,793,832 disclose air purification and temperature controlling systems and methods which use only pressure swing adsorption systems that include two adsorption beds.

US Patents 3,713,272 and 3,124,438 describe the use of three adsorption beds. These systems, however, rely only on a temperature swing, and no suggestion is made to vary the pressure or to combine with the systems mentioned above.

The present invention is based on a method for removing contaminants from and purifying intake air for breathing used for ventilating and controlling the temperature in a compartment, by pressurizing and heating the intake air to a first pressure and a first temperature, filtering the pressurized heated air to remove solids, vapors and liquids therefrom; and then passing the air in a first direction through one, alternately, of three identical adsorption beds comprising filtering material, for purifying, while simultaneously the two other beds are, respectively, heated and purged, and cooled, the operative steps of these three beds being repeated sequentially for maintaining a continuous supply of ventilating air, whereby the purified air, taken from the first one of the beds is depressurized by a turbo expander to a second pressure lower than the first pressure and a second temperature lower than the first temperature;
the heating and purging step is carried out at the bed having just been used for purifying, by passing a gas derived from the intake air heated to a third temperature higher than the first temperature and a pressure equal to the second pressure, through conduits in the filtering material for heating the bed, and by passing a portion of the purified air heated to a fourth temperature lower than the third temperature and a pressure equal to the second pressure through the filtering material in a second direction opposite to the first direction, for purging the bed;
the cooling step is carried out at the bed just having been used for heating and purging by passing a further portion of the purified air at the second pressure and the second temperature, through the conduits in the filtering material;
and the temperature of the purified air used for ventilation is controlled by selectively mixing the remainder of the purified air with a portion of the heated purified air.

For performing this method, means for pressurizing, heating and filtering the contaminated air are provided;
the three beds have a plurality of heat transferring conduits embedded in the filtering material;
valves are provided to pass the contaminated air at the first pressure and first temperature through the filtering material of the first bed in a first direction;
to pass gas of the third temperature and second pressure through the conduits of the second bed and gas of the fourth temperature and second pressure through the filtering material of the second bed in a second direction opposite to the first direction;
to pass gas at the second temperature and second pressure through conduits in the third bed; and
and control means for switching the operating state of each bed sequentially, and a turbo expander are provided for the purified air.

### BRIEF DESCRIPTION OF THE DRAWINGS

Figure 1 is a diagrammatic view of the pressure and temperature swing adsorption system of the present invention.

Figure 2 is an enlarged diagrammatic section of three pressure swing adsorption beds illustrating valves positioned for directing a filtering and cleaning fluid through a first bed; a purging and heating fluid through a second bed; and a cooling fluid through a third bed.

Figure 3 is similar to Figure 2 except that the valves are positioned so that the first bed accepts the purging and heating fluids through the first bed, cooling fluids through the second bed, and filtering and cleaning fluids through the third bed.

Figure 4 is the same as Figure 2 except that the valves are positioned so that cooling fluids pass through the first bed, filtering and cleaning fluids pass through the second bed, and purging and heating fluids pass through the third bed.

### DESCRIPTION OF THE PREFERRED EMBODIMENT

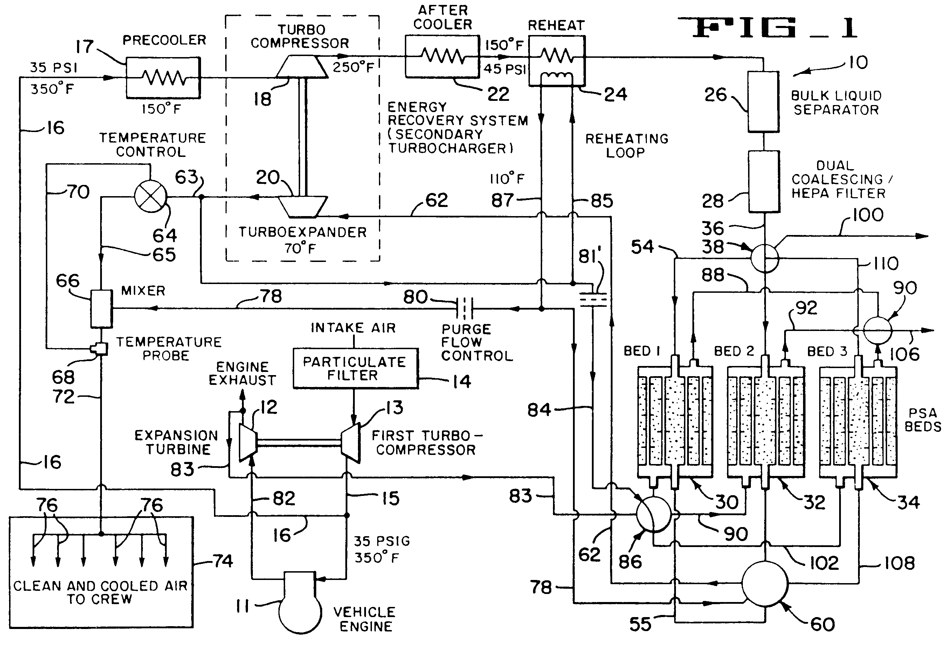

The pressure and temperature swing adsorption system 10 (Fig. 1) of the present invention is intended for use in combat vehicles (not shown) for continuously effectively and economically removing nuclear, biological and chemical contamination from air while controlling the temperature of the air for providing clean air at about 21°C (70° F). to the crew compartment of the vehicle and/or to conventional suits and masks (not shown) worn by the crew of the vehicle. It will be understood, however, that the system may be used in other environments where combustion power means, such as an engine; or from other sources of compressed air and hot exhaust gases, such as turbine bleed air from a turbine powered vehicle, jet aircraft power units, or similar power means. For example, the system may be used to provide clean cool air to one or more people in buildings, aircrafts, ships and private or commercial vehicles.

The system 10 (Fig. 1) includes a power source of anyone of the types mentioned above, which power source will hereinafter be called an engine 11. A first portion of the engine exhaust gas drives a conventional expansion turbine 12 which drives a first turbo-compressor 13 that receives intake air that may be contaminated air. The intake air first passes through a particulate filter 14 which removes particulates from the air such as dust or sand. The intake air then moves into the first turbo-compressor 13 which compresses the air and directs a portion of the compressed air into the vehicle engine 11 through a conduit 15 at about 2,46 kp/cm² (35 PSIG) and 176°C (350° F).

A second portion of the bleed air flows through a conduit 16 into a first precooler 17 at about 2,46 kp/cm² (35 PSIG) and a temperature of about 176°C (350° F). The precooler 17 cools the air to about 65°C (150° F). at 2,46 kp/cm² (35 PSI) gage, and directs the air to a second turbo-compressor 18 which heats the air to about 121°C (250° F). and drives a turbo-expander 20 which cools the air. The hot contaminated air from the turbo-compressor 18 is directed into an after cooler 22 and is discharged at a temperature of about 176°C (150° F). and a pressure of about 3,16 kp/cm² (45 PSIG) into a reheater 24 which provides contaminated air at about 38°C (100° F). and 3,16 kp/cm² (45 PSIG). The contaminated air then passes through a bulk liquid separator 26 which separates condensed vapors from incoming air and discharges the separated fluids externally of the combat vehicle through a pressure drain (not shown). The air then passes through a dual coalescing HEPA filter 28 which directs the separated contaminated fluids externally of the vehicle. The bulk liquid separator 26 and coalescing filter 28 protects three adsorption beds 30, 32 and 34 of the pressure and temperature swing adsorption system 10 from excessive adsorption of liquids and solids.

The contaminated air discharged from the dual coalescing filter 28 flows through a conduit 36 into a double row multiple passage bed feed valve 38 having a plurality of passages therein which will be described later.

As indicated previously, the hot compressed exhaust gases from the engine 11 drives the expansion turbine 12 and the first turbo-compressor 13 which directs contaminated air through conduits 15 and 16, the precooler 17, turbo-compressor 18, after cooler 22, reheater 24, bulk liquid separator 26 and filter 28 into the multiple passage valve 38. The above described components are directed to the pressure swing portion of the temperature and pressure swing adsorption system 10.

Another portion of the compressed exhaust gas, compressed air and cooled air are directed through the three adsorption beds 30, 32 and 34 for performing different functions at different times as will be described in detail hereinafter.

Contaminants are purged from each bed, one at a time, using hot exhaust gases at about 315°C (600° F). at a pressure of about 2,46 kp/cm² (35 PSIG) which defines the temperature swing adsorption portion of the present invention.

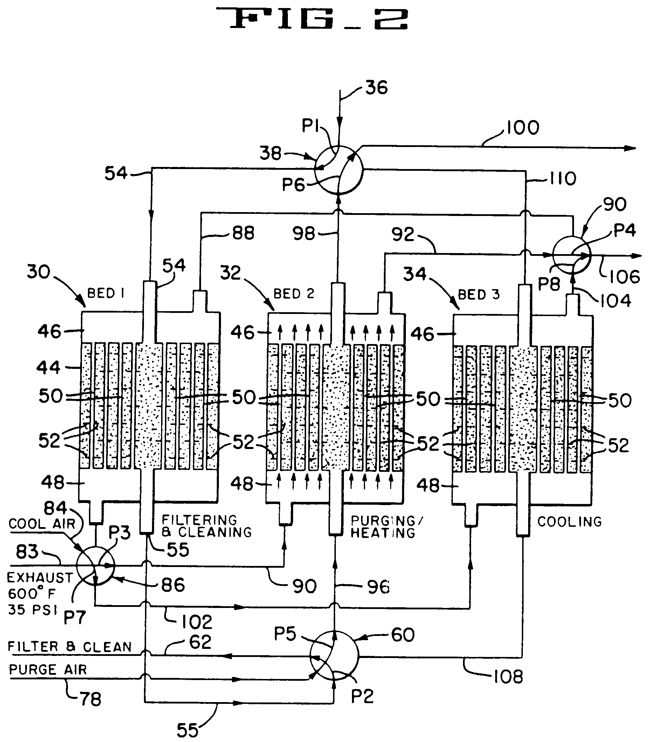

As diagrammatically illustrated in Figures 1 and 2, all adsorption beds 30, 32 and 34 are identical, but operate in different sequences, and accordingly only the bed 30 (Fig. 2) will be described in detail.

The bed 30 includes a housing 44 (Fig. 2) having an upper manifold 46 and a lower manifold 48 interconnected by a plurality of conduits 50 having heat transmitting fins 52 (only a portion being shown) thereon. A contaminated gas inlet conduit 54 is illustrated as being connected to the valve 38 and extending through the manifold 46, thus directing the contaminated air directly into the filtering material of the pressure and temperature swing BED 1. A clean air outlet conduit 55 extends from the bed through the outlet manifold 48.

The sequence of operation of the BEDS 1, 2 and 3 (Fig. 2) is: first; filter and clean the incoming air; second, purge and heat with hot exhaust gases at about 315°C (600° F).; and third, cool the bed to prepare the bed to more effectively filter and clean the next portion of contaminated gas. As indicated in Figures 2, 3 and 4, each BED 1, 2 and 3 simultaneously performs different functions of the three cycles, with the cycle time of each step being in the range between five to ten seconds, preferably at seven second intervals.

Having reference to Figure 2, contaminated air flows from conduit 36, through a first passage P1 in valve 38, through the conduit 54, and directly into and through the filtering material of BED 1. The filtered and clean air then passes through the conduit 55, a first passage P2 in a double row multi-passage valve 60, a conduit 62 (Figs. 1 and 2) to the turbo-expander 20 (Fig. 1) which is driven by the turbo-compressor 18.

The turbo-expander 20 cools the air to about 21°C (70° F.) and directs it through a conduit 63, a temperature controller 64, conduit 65, and a mixer 66. The temperature controller 64 is connected to a temperature probe 68 by a conduit 70, and the controller 64 may be adjusted to provide a desired air temperature for the crew in summer between about 15° - 21°C (60° - 70° F), and in winter at about 32° - 38°C (90° - 100° F). The mixer 66 directs cool air through a conduit 72 and into a crew compartment 74 of a vehicle (not shown) through a plurality of orifices 76.

A conduit 82 receives a portion of the hot exhaust gas from the engine 11 and directs it through conduit 83 to a valve 86.

Cool clean air from a conduit 84 (Fig. 1) passes through a conduit 85 into a heating coil in the reheater 24 which heats a portion of the air from conduits 84 and 85 to about 43°C (110° F). which flows through a conduit 87 to conduit 78. This heated air passes through the purge flow control valve 80, conduit 78, mixer 66 and temperature probe 68 to provide cool clean air during the bed cooling cycle, and to provide winter temperatures to the crew compartment 74 at between about 32° - 38°C (90° - 100° F)., and summer temperature between about 15° - 21°C (60° - 70° F). by appropriate adjustment of the temperature control 64.

A portion of the cool air from conduit 84 also flows through a flow control valve 81' in conduit 84 and into the double row multiple-way valve 86.

As above described, the contaminated air from outside the system is first filtered in BED 1, is purged/heated in BED 2, and is cooled in BED 3. These functions take place simultaneously during a period of time of between five to ten seconds, preferably about seven seconds.

Contaminated air from conduit 36 (Figs. 1 and 2) is directed through passage P1 in valve 38 and flows through conduit 54 into and through the filtering material in BED 1 which filters the contaminates from the air. The clean air is discharged through conduit 55, a passageway P2 in multiple row valve 60 and through conduit 62 for providing clean cool air to the crew compartment 74 and for cooling the filtering material in BED 3.

Simultaneously with the filtering and cleaning of BED 1, BED 2 receives hot exhaust gases at about 315°C (600°F) and 2,46 kp/cm² (35 psi) from conduit 83, a passage P3 in valve 86, which hot gases flow through conduit 90 and into the lower manifold 48 of BED 2. The hot exhaust gases then flow through the conduits 50 in BED 2 which transmits heat to the filtering material of BED 2 through the conduits 50 and fins 52. The hot gases then enter the upper manifold 46 of BED 2 and flow through a conduit 92 and a passage P4 in valve 90 to the atmosphere through conduit 106 thus heating the filtering material in BED 2. At the same time, purge air from conduit 78 (Figs. 1 and 2) flows through a passage P5 in valve 60 and a conduit 96 through the filtering material in BED 2 and through a conduit 98, and a passage P6 in valve 38 for discharge to the atmosphere through conduit 100 thus performing the purging operation of BED 2.

While BED 1 is filtering and cleaning and BED 2 is purging and heating, BED 3 is being cooled. Clean cool air at about 21°C (70°F) is directed through conduit 84, through a passage P7 in valve 86, which clean air flow through a conduit 102 and enters the lower manifold 48 of BED 3 and flows through the conduits 50 and into the upper manifold 46 for cooling the filtering material in BED 3. The cooling air is discharged to the atmosphere through conduit 104, a passage P8 in valve 90 and to the atmosphere through conduit 106.

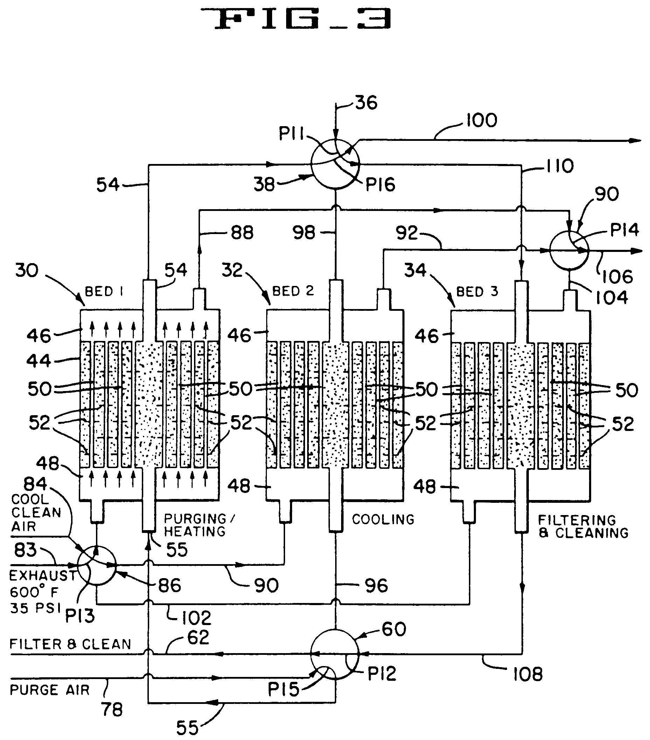

After about seven seconds of directing the several fluids into BEDs 1, 2 and 3 of Figure 2, the valves are shifted to cause BED 1 (Fig. 3) to be subjected to purging and heating fluid; BED 2 is subjected to cooling fluid; and BED 3 is receiving contaminated air from the atmosphere for filtering and cleaning.

Contaminated air is directed through conduit 36 through a passage P11 in valve 38, conduit 110 to and through the filtering material in BED 3, conduit 108, a passage P12 in valve 60, and conduit 62 to the turbo expander (Fig. 1). At the same time exhaust gases at about 315°C (600°F) and 2,46 kp/cm² (35 psig). are directed from conduit 83, through a passage P13 in valve 86 which heats the filtering material in BED 1 by passing through the conduits 50 as indicated by the arrows in BED 1. The hot exhaust gases flow through conduit 88, a passage P14 in valve 90, and to the atmosphere through conduit 106. Purging air from conduit 78 is directed through a passage P15 in valve 60, through conduit 55, the filtering material in BED 1, conduit 54, and a passage P16 in valve 38 for discharge to the atmosphere through conduit 100.

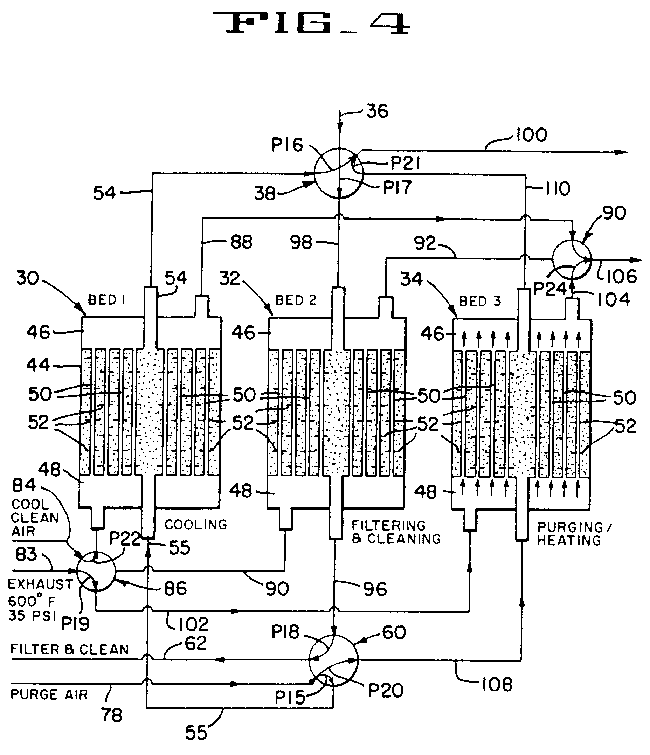

Having reference to Figure 4, after an additional time period of about seven seconds, contaminated air from conduit 36 is directed through a passage P17 in valve 38, through conduit 98, through the filtering material in BED 2, through conduit 96, a passageway P18 in valve 60 and thereafter directing the clean air through conduit 62 (Figs. 1 and 4) and to the tuboexpander 20.

At the same time, BED 3 is being heated and purged by hot exhaust gas at about 315°C (600°F) from conduit 83, passageway P19 in valve 86, through conduit 102, into and through the conduits 50 in BED 3, and through conduit 104, a passage P24 in valve 90 and to the atmosphere through conduit 106, thereby heating the filtering material which enhances the removal of contaminates from the air when in the subsequent cleaning and filtering cycle. At the same time, purging of the contaminates in BED 3 take place by directing cool clean purged air at about 21°C (70°F) from conduit 78, a passage P20 in valve 60, conduit 108, through the filtering material in BED 3, conduit 110, passage P21 in valve 38, and to the atmosphere through conduit 100.

While BED 2 is filtering and cleaning, and BED 3 is being purged and heated, BED 1 is being cooled. Cool clean purged air from conduit 78, a passage P15 in the valve 60, through the conduits 55 into and through BED 1, conduit 54, a passage P16 in valve 38, and to the atmosphere through conduit 100.

The above sequence of operations are repeated continuously while in a contaminated atmosphere to provide cool clean air to the crew compartment of a vehicle. If outside air is cold or hot but does not contain contaminants, the pressure and temperature swing adsorption system of the present invention can be used as an air conditioner.

From the foregoing description it is apparent that the pressure and temperature swing adsorption system of the present invention includes three identical adsorption BEDS 1, 2 and 3, each of which sequentially filter and clean contaminated air by first filtering and cleaning the contaminants from the contaminated air, and directing most of the clean air to the crew compartment 74 of the vehicle. When a first bed is cleaning contaminants from the air, a second bed is being purged and heated by engine exhaust gases at 2,46 kp/cm² (35 PSI) and 315°C (600° F). which cleans all contaminants from the filtering material in the second bed. At the same time filtering material in the third bed is cleaned by cool clean air at 21°C (70° F). and 2,46 kp/cm² (35 PSI) which cools the air and completely cleans the filtering material, thus requiring no replacement of the bed unless damaged by other means.

It has been determined that the beds when using 5,66 m³ (200 cubic feet) per minute of contaminated air moving through the system that 3,4 m³ (120 cubic feet) per minute of clean air is directed into the crew compartment 74, 1,7 m³ (60 cubic feet) per minute is used for purging the adsorption beds, and that only 0,56 m³ (20 cubic feet) per minute is used for cooling the pressure swing adsorption beds during each cycle of operation.

## Claims

1. A method for removing contaminants from and purifying intake air for breathing used for ventilating and controlling the temperature in a compartment, by pressurizing and heating (13, 17, 18, 22, 24) the intake air to a first pressure and a first temperature, filtering (26, 28) the pressurized heated air to remove solids, vapors and liquids therefrom; and then passing the air in a first direction through one, alternately, of three identical adsorption beds (30, 32, 34) comprising filtering material, for purifying, while simultaneously the two other beds are, respectively, heated and purged, and cooled, the operative steps of these three beds being repeated sequentially for maintaining a continuous supply of ventilating air, whereby the purified air, taken from the first one of the beds (e.g. 30) is depressurized by a turbo expander (20) to a second pressure lower than the first pressure and a second temperature lower than the first temperature;
the heating and purging step is carried out at the bed (e.g. 32) having just been used for purifying, by passing a gas derived from the intake air heated to a third temperature higher than the first temperature and a pressure equal to the second pressure, through conduits in the filtering material for heating the bed, and by passing a portion of the purified air heated (24) to a fourth temperature lower than the third temperature and a pressure equal to the second pressure through the filtering material in a second direction opposite to the first direction, for purging the bed;
the cooling step is carried out at the bed (e.g. 34) just having been used for heating and purging by passing a further portion of the purified air at the second pressure and the second temperature, through the conduits in the filtering material;
and the temperature of the purified air used for ventilation is controlled (64, 68) by selectively mining (66) the remainder of the purified air with a portion of the heated (24) purified air.

2. Method according to claim 1, wherein the first pressure is approximately 3.16 kp per cm² (45 psig) and the first temperature is approximately 38 °C (100°F), and the fourth temperature is approximately 43 °C (110°F).

3. Method according to claim 1, wherein the second temperature is approximately 21 °C (70°F), the second pressure is approximately 2.46 kp pro cm² (35 psig), and the third temperature is approximately 315 °C (600°F).

4. A system for performing the method of claim 1, characterized in that means for pressurizing, heating and filtering the contaminated air are provided;
that the three beds (30, 32, 34) have a plurality of heat transferring conduits embedded in the filtering material,
valves (38, 60, 86, 90) are provided to pass the contaminated air at the first pressure and first temperature through the filtering material of the first bed in a first direction;
to pass gas of the third temperature and second pressure through the conduits of the second bed and gas of the fourth temperature and second pressure through the filtering material of the second bed in a second direction opposite to the first direction; and
to pass gas at the second temperature and second pressure through conduits in the third bed,
and that control means for switching the operating state of each bed sequentially, and a turbo expander (20) are provided for the purified air.

## Patentansprüche

1. Verfahren zur Entfernung von Verunreinigungen aus und zur Reinigung von Ansaug-Atemluft, verwendet zum Belüften von und zur Temperatursteuerung in einem Abteil, durch Unter-Druck-Setzen und Erhitzen (13, 17, 18, 22, 24) der Ansaugluft auf einen ersten Druck und eine erste Temperatur, Filtern (26, 28) der unter Druck gesetzte Luft zur Entfernung von festen Teilchen, Dämpfen und Flüssigkeiten daraus; und dann Leiten der Luft in einer ersten Richtung durch abwechselnd eines von drei identischen Absorptionsbetten (30, 32, 34) mit Filtermaterial, zwecks Reinigung, während gleichzeitig die zwei anderen Betten jeweils erhitzt und ausgeblasen bzw. gekühlt werden, und die Betriebsschritte dieser drei Betten aufeinanderfolgend wiederholt werden zwecks Aufrechterhaltung einer kontinuierlichen Zufuhr von Belüftungsluft, wobei die gereinigte Luft, die aus dem ersten der Betten (z.B. 30) entnommen wird, durch einen Turboexpander (20) auf einen zweiten Druck abgesenkt wird, der niedriger ist als der erste Druck, und auf eine zweite Temperatur, die niedriger ist als die erste Temperatur; wobei
der Erhitzungs- und Ausblasschritt an demjenigen Bett (z.B. 32) ausgeführt wird, das gerade für das Reinigen verwendet worden ist, durch Hindurchleiten eines Gases, das aus der auf eine dritte Temperatur höher als die erste Temperatur und einen Druck gleich dem zweiten Druck erhitzten Ansaugluft abgezweigt wurde, durch Leitungen im Filtermaterial zwecks Erhitzen des Bettes, und durch Hindurchleiten eines Teils der gereinigten Luft, die auf eine vierte Temperatur niedriger als die dritte Temperatur und einen Druck gleich dem zweiten Druck erhitzt wurde (24), durch das Filtermaterial in einer zweiten Richtung entgegengesetzt der ersten Richtung zwecks Ausblasen des Bettes; wobei
der Kühlungschritt an dem Bett (z.B. 34) ausgeführt wird, das gerade für das Erhitzen und Ausblasen verwendet worden ist, durch Hindurchleiten eines weiteren Teils der gereinigten Luft bei dem zweiten Druck und der zweiten Temperatur durch die Leitungen in dem Filtermaterial;
und die Temperatur der für die Belüftung verwendeten gereinigten Luft gesteuert wird (64, 68) durch selektives Mischen (66) der übrigen gereinigten Luft mit einem Teil der erhitzten (24) gereinigten Luft.

2. Verfahren nach Anspruch 1, wobei der erste Druck ungefähr 3,16 kp pro cm² (45 PSIG) und die zweite und die erste Temperatur ungefähr 38°C (100°F) ist, und die vierte Temperatur ungefähr 43°C (110°F) ist.

3. Verfahren nach Anspruch 1, wobei die zweite Temperatur ungefähr 21°C (70°F), der zweite Druck ungefähr 2,46 kp pro cm² (35PSIG) und die dritte Temperatur ungefähr 315°C (600°F) beträgt.

4. System zur Durchführung des Verfahrens nach Anspruch 1, dadurch gekennzeichnet, daß Einrichtungen zum Unter-Druck-Setzen, Erhitzen und Filtern der verunreinigten Luft vorgesehen sind;
daß die drei Betten (30, 32, 34) eine Mehrzahl von wärmeübertragenden Leitungen in dem Filtermaterial eingebettet haben,
Ventile (38, 60, 86, 90) vorgesehen sind, um die verunreinigte Luft bei dem ersten Druck und der ersten Temperatur durch das Filtermaterial des ersten Betts in einer ersten Richtung zu leiten,
Gas der dritten Temperatur und des zweiten Drucks durch die Leitungen des zweiten Betts und das der vierten Temperatur und des zweiten Drucks durch das Filtermaterial des zweiten Betts in einer zweiten Richtung entgegengesetzt zur ersten Richtung zu leiten, und
Gas mit der zweiten Temperatur und dem zweiten Druck durch Leitungen in dem dritten Bett zu leiten;
und daß Steuereinrichtungen zum aufeinanderfolgenden Umschalten des Betriebszustandes jedes Bettes, und ein Turboexpander (20) für die gereinigte Luft vorgesehen sind.

## Revendications

1. Procédé d'élimination de contaminants et de purification d'air d'admission, à des fins de respiration et servant à la ventilation et à la maîtrise de la température dans un habitacle, par mise en pression et chauffage (13, 17, 18, 22, 24) de l'air d'admission à une première pression et une première température, par filtration (26, 28) de l'air chauffé sous pression afin d'en éliminer les solides, les vapeurs et les liquides ; et ensuite par passage de l'air dans un premier sens à travers l'un, tour à tour, de trois lits d'adsorption identiques (30, 32, 34), comprenant une matière filtrante, pour la purification, tandis que simultanément las deux autres lits sont respectivement, chauffés et purgés, et refroidis, les étapes de fonctionnement de ces trois lits étant répétées successivement afin de maintenir une alimentation continue d'air de ventilation, et l'air purifié, extrait du premier des lits (par exemple 30) étant détendu par uni turbodétendeur (20) à une deuxième pression, inférieure à la première pression et à une deuxième température, inférieure à la première température ;
l'étape de chauffage et de purge étant effectuée sur le lit (par exemple 32) qui vient juste d'être utilisé pour la purification, en faisant passer, par des conduits dans la matière filtrante, un gaz, provenant de l'air d'admission et chauffé à une troisième température, supérieure à la première température, et à une pression égale à la deuxième pression, afin de chauffer le lit, et en faisant passer une fraction de l'air purifié chauffé (24) à une quatrième température, inférieure à la troisième température, et à une pression égale à la deuxième pression, à travers la matière filtrants dans un second sens opposé au premier sens, afin purger le lit ;
l'étape de refroidissement étant effectuée sur le lit (par exemple 34) qui vient juste d'être utilisé pour le chauffage et la purge, en faisant passer une autre fraction de l'air purifié à la deuxième pression et à la deuxième température, par l'intermédiaire des conduits dans la matière filtrante ;
et la température de l'air purifié servant à la ventilation étant contrôlée (64, 68) par mélange sélectif (66) du restant de l'air purifié et d'une fraction de l'air purifié chauffé (24).

2. Procédé selon la revendication 1, dans lequel la première pression est d'approximativement 3,16 kp par cm² (45 psig), la première température est d'approximativement 38 °C (100 °F) et la quatrième température est d'approximativement 43 °C (110 °F).

3. Procédé selon la revendication 1, dans lequel la deuxième température est d'approximativement 21 °C (70 °F), la deuxième pression est d'approximativement 2,46 kp par cm² (35 psig) et la troisième température est d'approximativement 315 °C (600 °F).

4. Système pour la mise en oeuvre du procédé selon la revendication 1, caractérisé en ce qu'il est prévu des moyens pour la mise en pression, le chauffage et le filtrage de l'air contaminé ;
en ce que les trois lits (30, 32, 34) comportent une pluralité de conduits de transfert de chaleur noyés dans la matière filtrante ;
des soupapes (38, 60, 86, 90) sont prévues pour faire passer l'air contaminé, à la première pression et à la première température, à travers la matière filtrante du premier lit dans un premier sens ;
pour faire passer du gaz, à la troisième température et à la deuxième pression, dans les conduits du deuxième lit, et du gaz, à la quatrième température et à la deuxième pression, à travers la matière filtrante du deuxième lit, dans un deuxième sens, opposé au premier sens ; et
pour faire passer du gaz, à la deuxième température et à la deuxième pression, dans des conduits dans le troisième lit ;
et en ce qu'il est prévu des moyens de commande pour la commutation de l'état de fonctionnement de chaque lit successivement, et un turbodétendeur (20) pour l'air purifié.
